# EUROPÄISCHE PATENTANMELDUNG

(11) **EP 1 510 720 A2**
(43) Veröffentlichungstag der Anmeldung: **02.03.2005**
(21) Anmeldenummer: 04102748.3
(22) Anmeldetag: 16.06.2004
(51) Int. Cl.: F16D 65/12

(54) **Verfahren zur Herstellung einer Bremsscheibe und Bremsscheibe**

(30) Priorität: 27.08.2003 DE 10339315
(71) Anmelder: ROBERT BOSCH GMBH, 70442 Stuttgart (DE)
(72) Erfinder: Reinsch, Bernd, 71642 Ludwigsburg (DE); Postler, Iris, 71229 Leonberg (DE); Czerwinski, Klaus, 73574 Iggingen (DE); Leonhardt, Matthias, 70437 Stuttgart (DE)

(57) **Zusammenfassung**

Es wird ein Verfahren zur Herstellung einer Bremsscheibe (10) sowie eine Bremsscheibe (10) aus einem Keramik/Intermetall-Verbundwerkstoff vorgeschlagen. Bei dem Verfahren wird ein zumindest einteiliger, keramischer Vorkörper hergestellt, der mit einer Metallschmelze infiltriert wird. Erfindungsgemäß werden vor der Infiltration mit Metallschmelze Kühlkanäle (14) an dem Vorkörper ausgebildet (Figur 1).

## Beschreibung

### Stand der Technik

Die Erfindung geht von einem Verfahren zur Herstellung einer Bremsscheibe aus einem Keramik/Intermetall-Verbundwerkstoff gemäß der im Oberbegriff des Patentanspruches 1 näher definierten Art sowie von einer Bremsscheibe gemäß der im Oberbegriff des Patentanspruches 13 näher definierten Art aus.

Die Herstellung eines Keramik/Intermetall-Verbundwerkstoffes ist aus der Praxis bekannt. Hierbei wird ein poröser keramischer Vorkörper mit einer Metallschmelze, beispielsweise einer gut vergießbaren Aluminiumlegierung, drucklos oder unter Aufbringung eines äußeren Drucks infiltriert. Der keramische Vorkörper besteht zumindest teilweise aus einer gegenüber dem eingesetzten Metall reaktiven Verbindung, beispielsweise aus Cr₂O₃, CuO, Co₂O₃, Fe₂O₃, Fe₃O₄, MgO, MoO₃, NiO, TiO, TiO₂, WO₃ und/oder Y₂O₃. Eine Umsetzung des Metalls mit dem keramischen Reaktivanteil zu einer intermetallischen und einer keramischen Verbindung erfolgt entweder in situ bei der Infiltration oder bei einer definierten thermischen Nachbehandlung des nach der Infiltration vorliegenden Keramik/Metall-Körpers.

Keramik/Intermetall-Verbundwerkstoffe können zur Herstellung von Bauteilen eingesetzt werden, bei denen eine hohe Verschleiß- und Korrosionsbeständigkeit sowie eine geringe Dichte vorteilhaft ist. Mithin stellen Bremsscheiben ein besonders geeignetes Anwendungsgebiet für Keramik/Intermetall-Verbundwerkstoffe dar.

Ein Verfahren zur Herstellung einer Bremsscheibe aus einem Keramik/Metall-Verbundwerkstoff ist beispielsweise aus der DE 197 06 926 A 1 bekannt. Bei diesem Verfahren wird aus einem keramischen Pulver ein Grünkörper gepresst, der anschließend gesintert wird und dann einen Vorkörper bzw. einen Opferkörper bildet, der mit einer Metallschmelze aus Aluminium befüllt bzw. infiltriert wird. Die Befüllung erfolgt mittels eines Druckgussverfahrens. Nach der Befüllung wird der befüllte Opferkörper erhitzt, so dass das Metall und die Keramik eine Nachreaktion eingehen und ein Keramik-Metall-Verbundkörper resultiert.

Bei einem Bremsvorgang ist trotz des hohen Energieeintrages eine Bremsscheibentemperatur von mehr als 750 °C zu vermeiden, damit der Reibpartner der Bremsscheibe und sonstige die Bremsscheibe umgebende Komponenten keinen zu hohen thermischen Belastungen ausgesetzt sind. Eine Absenkung der bei einem Bremsvorgang auftretenden Temperaturen verringert zudem thermische Spannungen, die bei dem Bremsvorgang innerhalb der Bremsscheibe auftreten, was somit auch die Zuverlässigkeit der Bremsscheibe erhöht.

Bei herkömmlichen Bremsscheiben aus Grauguss wird zur Verringerung der auftretenden Maximaltemperaturen eine aus Kühlkanälen bestehende Innenbelüftung vorgesehen. Das Einbringen von Kühlkanälen bzw. Kanalstrukturen in ein Keramik/Intermetall-Verbundbauteil ist jedoch aufgrund der hohen Verschleißbeständigkeit des Werkstoffes sehr aufwändig und daher aus Kostengründen häufig unerwünscht.

Es ist Aufgabe der vorliegenden Erfindung ein Verfahren zur Herstellung einer Bremsscheibe aus einem Keramik/Intermetall-Verbundwerkstoff sowie eine Bremsscheibe bereitzustellen, wobei auf einfache und kostengünstige Art und Weise Kühlkanäle in die Bremsscheibe einbringbar sind und die Bremsscheibe in hohem Maße verschleißbeständig ist.

### Vorteile der Erfindung

Das erfindungsgemäße Verfahren zur Herstellung einer Bremsscheibe aus einem Keramik/Intermetall-Verbundwerkstoff mit den Merkmalen nach dem Oberbegriff des Patentanspruches 1, bei welchem Verfahren vor der Infiltration der Metallschmelze Kühlkanäle an dem Vorkörper ausgebildet werden, hat den Vorteil, dass die Kühlkanäle zu einem Zeitpunkt gefertigt werden, zu dem der verschleißbeständige Keramik/Intermetall-Verbundwerkstoff der Bremsscheibe einer einfachen mechanischen Bearbeitung noch nicht im Wege steht.

Durch Einsatz des Verfahrens nach der Erfindung ist es somit möglich, innenbelüftete Bremsscheiben aus einem Keramik/Intermetall-Verbundwerkstoff herzustellen, ohne dass hierzu der kostspielige Einsatz von Werkzeugen hoher mechanischer Festigkeit erforderlich wäre.

Der Vorkörper besteht zumindest teilweise aus einer gegenüber der Metallschmelze reaktiven Verbindung. Beispielsweise kann der Vorkörper aus einem keramischen Material wie Cr₂O₃, CuO, Co₂O₃, Fe₂O₃, Fe₃O₄, MgO, MoO₃, NiO, TiO, TiO₂, WO₃ und/oder Y₂O₃ bestehen. Bevorzugt wird als keramisches Material jedoch TiO₂ eingesetzt. Die Metallschmelze kann beispielsweise aus Aluminium oder einer Aluminiumlegierung bestehen. Bei einer thermischen Nachbehandlung bzw. Nachreaktion kann dann eine Umsetzung von TiO₂ und dem Aluminium bzw. der Aluminiumlegierung zu TiAlₓ und Al₂O₃ erfolgen.

Die Herstellung der Kühlkanäle vor dem Infiltrieren der Metallschmelze kann auf unterschiedliche Weise erfolgen. So können die Kühlkanäle beispielsweise in einen Grünkörper des keramischen Vorkörpers gebohrt und/oder gefräst werden.

Alternativ können die Kühlkanäle durch Schieber eines Presswerkzeuges zur Herstellung eines Grünkörpers des Vorkörpers gebildet werden.

Bei einer weiteren, alternativen Ausführungsform des Verfahrens nach der Erfindung werden die Kühlkanäle durch Einleger beim Verpressen eines Grünkörpers des Vorkörpers hergestellt. Die Einleger definieren die späteren Kühlkanäle der Bremsscheibe. Die Einleger können je nach Ausführungsform des Verfahrens entweder vor oder auch nach dem Sintern des Grünkörpers oder auch nach der Infiltration der Metallschmelze entnommen werden.

Ferner können auch Einleger eingesetzt werden, die sich während des Infiltrationsvorganges oder während einer thermischen Nachbehandlung auflösen. Als Material für die Einleger können beispielsweise Wachs, Salz, Sand und/oder Polymere, wie Thermoplaste oder Duromere, eingesetzt werden.

Auch kann das Verfahren nach der Erfindung so geführt werden, dass der keramische Vorkörper unter Ausbildung der Lüftungskanäle nach einer Pulverspritzgießtechnik, beispielsweise nach dem sogenannten PIM(Powder Injection Moulding)- oder dem sogenannten CIM(Ceramic Injection Moulding)-Verfahren hergestellt wird. Derartige Verfahren ermöglichen die Ausbildung komplexer Bauteilformen mit Hohlräumen, welche im vorliegenden Fall von den Kühlkanälen gebildet werden.

Alternativ kann das Verfahren nach der Erfindung auch so geführt werden, dass zur Herstellung des Vorkörpers erst zwei zunächst jeweils einen Grundkörper bildende Halbscheiben gefertigt werden, welche vor oder nach der Infiltration mit der Metallschmelze verbunden werden. Die Fertigung der Halbscheiben erfolgt in der Regel in einem Presswerkzeug, dessen Formhohlraum so ausgebildet sein kann, dass sich während des Pressvorgangs Stege ausbilden, welche die Lüftungskanäle in Umfangsrichtung der Bremsscheibe begrenzen.

Die jeweils ein Bauteil bildenden Halbscheiben können auch nach dem Pressvorgang zur Herausarbeitung von die Kühlkanäle voneinander trennenden Stegen mechanisch bearbeitet werden.

Ferner ist es auch denkbar, zwei Halbscheiben und die die Kühlkanäle voneinander trennenden Stege separat zu Grünkörpern zu pressen. Die einzelnen Bauteile, d. h. die Stege und die beiden Halbscheiben, müssen dann noch vor oder nach dem Sintern bzw. vor oder nach der Infiltration der Metallschmelze auf mechanisch stabile Weise miteinander verfügt werden.

Ein Verfügen der einzelnen infiltrierten und nachreagierten Bauteile, d. h. der Halbscheiben und gegebenenfalls der Stege, kann beispielsweise unter Verwendung eines Hartlotes erfolgen. In einem Prozessstudium vor der Nachreaktion kann ein Verfügung mittels eines Keramikschlickers in Verbindung mit einer Temperaturbehandlung erfolgen.

Der Keramikschlicker hat einen fluiden Anteil, der in der Regel aus Wasser oder einem organischen Lösungsmittel besteht, dem ein Binder oder ein Entschäumer zugegeben sein kann. Der Keramikschlicker umfasst des Weiteren vorzugsweise zumindest das in dem keramischen Vorkörper eingesetzte Reaktivoxid, beispielsweise TiO₂. Hierdurch ist gewährleistet, dass eine aus einem reaktiven Umsatz mit beispielsweise Aluminium resultierende Fügeschicht zwischen den Bauteilen des fertigen Keramik/Intermetall-Verbundbauteils ebenfalls aus einer Keramik und einer Intermetallverbindung besteht.

Zusätzlich kann zur mechanischen Stabilisierung des Fügebereichs zwischen den einzelnen Bauteilen ein Stoff zugegeben werden, der bei einer Temperaturbehandlung mit einem weiteren Schlickerbestandteil reagiert. Beispielsweise kann dem Schlicker zu diesem Zweck MgO, das mit TiO₂ zu MgTiO₃ reagiert, oder auch Al zugegeben werden, das mit TiO₂ zu Al₂O₃ und Titanaluminiden umgesetzt wird.

Das Verfügen der einzelnen Bauteile mittels eines Keramikschlickers kann auf unterschiedliche Weise erfolgen. So kann der Keramikschlicker auf Kontaktflächen der die einzelnen Bauteile bildende Grünkörper aufgetragen werden, wobei dann eine Verbindung der aneinander gefügten Teile zu einem einheitlichen Vorkörper während des Sinterns des Vorkörpers erfolgt.

Alternativ können die einzelnen Bauteile des Vorkörpers nach dem Sintern mit dem Keramikschlicker aneinander gefügt werden. Während der Infiltration mit der Metallschmelze werden die Bauteile dann auf reaktivem Wege miteinander verbunden.

Auch ist es denkbar, dass die einzelnen Bauteile verpresst, gesintert und infiltriert und anschließend mit dem Keramikschlicker zusammengefügt werden. Die mechanisch stabile Verbindung zwischen den einzelnen, bereits infiltrierten Bauteilen wird während der Nachreaktion, d. h. während der Temperaturnachbehandlung realisiert. Der Keramikschlicker umfasst auch in diesem Falle vorzugsweise Aluminium, so dass eine Keramik/Intermetall-Fügeschicht entsteht.

Auch ist es denkbar, unterschiedliche Schlicker bzw. Keramikschlicker mit Partikeln unterschiedlicher Korngröße einzusetzen. Zur Verbesserung der Haftung werden in diesem Falle zunächst die mit Partikeln geringerer Korngröße hergestellten Suspensionen und anschließend diejenigen Schlicker, die gröbere Korngrößen enthalten, auf die Grenzflächen der zu fügenden Bauteile aufgebracht.

Sind nach dem Infiltrationsvorgang die bereits in dem Vorkörper ausgearbeiteten Kanäle mit Aluminium bzw. einer Aluminiumlegierung gefüllt, kann ein Entfernen des Metalls durch Aufschmelzen und gleichzeitiges Herausschleudern der Schmelze in einer Zentrifuge erfolgen. Dieser Prozessschritt kann gegebenenfalls zusammen mit demjenigen der Nachreaktion bzw. Temperaturnachbehandlung durchgeführt werden.

Um eine passgenaue Verbindung zwischen den einzelnen Bauteilen des Vorkörpers sicherzustellen, werden die zu fügenden Bauteile zur Verbesserung des Kontaktes vorzugsweise während der Temperaturbehandlung, d. h. während des Vorkörpersinterns, während der Infiltration mit der Metallschmelze oder während der Nachreaktion mittels Gewichten und/oder Klammern zusammen gepresst.

Die Erfindung hat auch eine Bremsscheibe aus einem Keramik/Intermetall-Verbundwerkstoff zum Gegenstand. Erfindungsgemäß ist die Bremsscheibe dadurch gekennzeichnet, dass sie Kühlkanäle umfasst, die durch Stege voneinander getrennt sind. Eine derartige Bremsscheibe weist eine hohe Verschleißbeständigkeit und Mittel zur Begrenzung der maximalen Arbeitstemperatur auf.

Weitere Vorteile und vorteilhafte Ausgestaltungen des Gegenstandes nach der Erfindung sind der Beschreibung, der Zeichnung und den Patentansprüchen entnehmbar.

### Zeichnung

Zwei Ausführungsbeispiele des Gegenstandes nach der Erfindung sind in der Zeichnung schematisch vereinfacht dargestellt und werden in der nachfolgenden Beschreibung näher erläutert. Es zeigen
Figur 1 eine vereinfachte dreidimensionale Ansicht einer Bremsscheibe aus einem Keramik/Intermetall-Werkstoff mit Kühlkanälen; und
Figur 2 zwei Halbscheiben einer Bremsscheibe aus einem Keramik/Intermetall-Werkstoff.

### Beschreibung der Ausführungsbeispiele

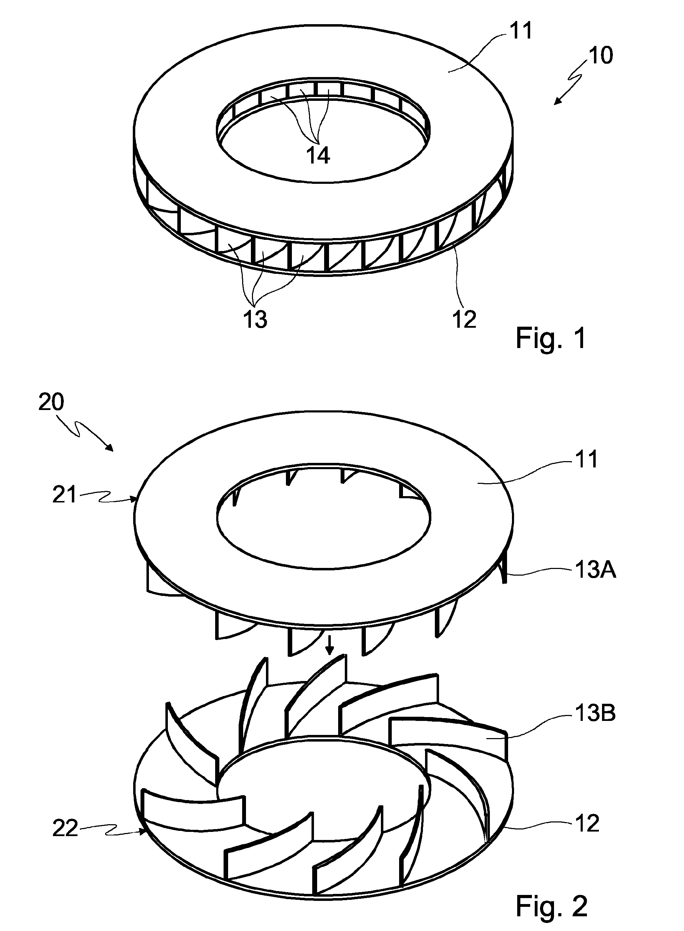

In Figur 1 ist eine Bremsscheibe 10 für eine ansonsten hier nicht näher dargestellte Bremse eines Kraftfahrzeuges dargestellt. Die Bremsscheibe 10 besteht aus einem Keramik/Intermetall-Verbundwerkstoff und ist mit einer Innenbelüftung versehen.

Die Bremsscheibe 10 ist aus zwei ringförmigen Begrenzungsscheiben 11 und 12 gebildet, die über Stege bzw. Lamellen 13, die parallel zur Drehachse der Bremsscheibe 10 ausgerichtet sind und zumindest in grober Annäherung in radialer Richtung verlaufen, miteinander verbunden sind. Die Stege 13 begrenzen jeweils Kühlkanäle 14, die von der Außenseite an die Innenseite der ringförmigen Bremsscheibe 10 führen.

Die Herstellung der in Figur 1 dargestellten Bremsscheibe 10 erfolgt in nachfolgend beschriebener Weise.

Zunächst wird ein Pulver aus TiO₂ hergestellt, das gegebenenfalls mit einem Binder versehen und vermischt wird. Das so entstandene Gemisch wird getrocknet, dann in eine Presse gegeben und dort zu einem als Vollscheibe ausgebildeten Grünkörper verpresst. Der als Vollscheibe ausgebildete Grünkörper wird anschließend entformt und mittels Bohr- bzw. Fräswerkzeugen bearbeitet, so dass an dem Grünkörper die Kühlkanäle 14 der in Figur 1 dargestellten Bremsscheibe 10 entstehen.

Der Grünkörper wird also so bearbeitet, dass ein Vorkörper entsteht, an dem die ringförmigen Begrenzungsscheiben 11 und 12 sowie die die Kühlkanäle 14 begrenzenden Stege 13 ausgebildet sind. Der bearbeitete Grünkörper wird anschließend gesintert, so dass ein poröser Opferkörper aus einem keramischen Material entsteht. Anschließend wird der gesinterte Opferkörper bzw. Vorkörper nach einem Druckgussverfahren in einer Druckgussform mit einer Metallschmelze aus Aluminiumlegierung infiltriert bzw. befüllt. Die Metallschmelze hat bei der Befüllung eine Temperatur zwischen 600 °C und 700 °C.

Anschließend wird der mit der Metallschmelze befüllte Vorkörper einer thermischen Nachbehandlung bei einer Temperatur von über 650 °C unterzogen. Bei der Nachbehandlung erfolgt eine Nachreaktion zwischen der Metallschmelze und der Keramik. Dabei bildet sich die in Figur 1 dargestellte Bremsscheibe aus dem Keramik/Intermetall-Verbundwerkstoff aus.

In Figur 2 ist eine alternative Ausführungsform einer Bremsscheibe 20 dargestellt, deren Ausbildung im fertigen Zustand im Wesentlichen derjenigen der Bremsscheibe nach Figur 1 entspricht und mithin zwei Begrenzungsscheiben 11 und 12 aufweist, die über Stege 13A bzw. 13B miteinander verbunden sind, welche zumindest in grober Annäherung radial verlaufende Kühlkanäle voneinander trennen.

Die Fertigung der Bremsscheibe 20 unterscheidet sich jedoch von der Fertigung der Bremsscheibe nach Figur 1 dadurch, dass zunächst in einem Presswerkzeug aus einem Pulver aus TiO₂ zwei Halbscheiben 21 und 22 gepresst werden, die jeweils aus einer Begrenzungsscheibe 11 bzw. 12 und von dieser axial vorspringenden Stegen 13A bzw. 13B bestehen, die in Umfangsrichtung auf der Innenseite der jeweiligen Begrenzungsscheibe 11 bzw. 12 verteilt sind.

Die Halbscheiben 21 und 22 werden nach dem Pressen gesintert und daraufhin mittels eines Keramikschlickers, der TiO₂ und MgO umfasst, aneinander gefügt, so dass ein Werkstück mit der Form der in Figur 1 dargestellten Bremsscheibe entsteht. Der Keramikschlicker wird hierzu auf die der jeweiligen Halbscheibe 11 bzw. 12 abgewandten Kontaktflächen der jeweiligen Stege 13A bzw. 13B aufgetragen. Anschließend werden die nun zu einem Vorkörper bzw. Opferkörper aneinander gefügten Halbscheiben 21 und 22 mittels Gewichten oder Klammern zusammengehalten und nach einem Druckgussverfahren mit einer Metallschmelze aus einer Aluminiumlegierung infiltriert und dann einer thermischen Nachbehandlung bei einer Temperatur von über 650 °C unterzogen.

Bei der Temperaturnachbehandlung erfolgt einerseits eine Umsetzung der Keramikschlickerbestandteile zu MgTiO₃ und von TiO₂ und Al zu TiAl₃ und Al₂O₃ und damit auf reaktivem Wege eine verschleißfeste Verbindung zwischen den beiden Halbschalen 21 und 22 und andererseits die Ausbildung eines Keramik/Intermetall-Verbundkörpers aus dem keramischen Vorkörper und der Schmelze aus der Aluminiumlegierung.

Die nach der Infiltration mit der Metallschmelze in den Kühlkanälen 14 enthaltene Metallschmelze kann dadurch entfernt werden, dass sie aufgeschmolzen und gleichzeitig in einer Zentrifuge herausgeschleudert wird. Dieser Prozessschritt kann gegebenenfalls zusammen mit der thermischen Nachbehandlung ausgeführt werden.

Durch die Fertigung des Vorkörpers bzw. Opferkörpers der Bremsscheibe 20 mit Kühlkanälen ist es nicht erforderlich, zur Ausformung der Kühlkanäle aufwändige und kostspielige mechanische Bearbeitungsverfahren einzusetzen.

## Patentansprüche

1. Verfahren zur Herstellung einer Bremsscheibe aus einem Keramik/Intermetall-Verbundwerkstoff, bei welchem Verfahren ein zumindest einteiliger, keramischer Vorkörper hergestellt wird, der mit einer Metallschmelze infiltriert wird, **dadurch gekennzeichnet, dass** vor der Infiltration der Metallschmelze Kühlkanäle (14) an dem Vorkörper ausgebildet werden.

2. Verfahren nach Anspruch 1, **dadurch gekennzeichnet, dass** die Kühlkanäle (14) in einen Grünkörper des Vorkörpers gebohrt und/oder gefräst werden.

3. Verfahren nach Anspruch 1, **dadurch gekennzeichnet, dass** die Kühlkanäle durch Schieber eines Presswerkzeuges zur Herstellung eines Grünkörpers des Vorkörpers gebildet werden.

4. Verfahren nach Anspruch 1, **dadurch gekennzeichnet, dass** die Kühlkanäle beim Verpressen eines Grünkörpers des Vorkörpers durch Einleger hergestellt werden.

5. Verfahren nach Anspruch 4, **dadurch gekennzeichnet, dass** die Einleger aus Wachs, Sand, Salz und/oder Polymeren gebildet sind.

6. Verfahren nach Anspruch 1, **dadurch gekennzeichnet, dass** der Vorkörper nach einem Pulverspritzverfahren unter Ausbildung der Kühlkanäle hergestellt wird.

7. Verfahren nach Anspruch 1, **dadurch gekennzeichnet, dass** zur Herstellung des Vorkörpers zwei Halbscheiben (21, 22) gefertigt werden, die miteinander verbunden werden.

8. Verfahren nach Anspruch 7, **dadurch gekennzeichnet, dass** die beiden Halbscheiben (21, 22) unter Bildung von Stegen (13A,13B) geformt werden, die die Lüftungskanäle begrenzen.

9. Verfahren nach Anspruch 7, **dadurch gekennzeichnet, dass** die Halbscheiben gepresst und anschließend die Kühlkanäle voneinander trennende Stege mechanisch geformt werden.

10. Verfahren nach Anspruch 1, **dadurch gekennzeichnet, dass** zwei Halbscheiben und die Kühlkanäle voneinander trennende Stege jeweils separat gepresst werden.

11. Verfahren nach einem der Ansprüche 7 bis 10, **dadurch gekennzeichnet, dass** die beiden Halbscheiben und gegebenenfalls die Stege mittels eines Hartlotes miteinander verbunden werden.

12. Verfahren nach einem der Ansprüche 7 bis 10, **dadurch gekennzeichnet, dass** die beiden Halbscheiben (21, 22) und gegebenenfalls die Stege (13A, 13B) mittels eines Schlickers miteinander verbunden werden.

13. Bremsscheibe aus einem Keramik/Intermetall-Verbundwerkstoff, **gekennzeichnet durch** Kühlkanäle (14), die **durch** Stege (13; 13A, 13B) voneinander getrennt sind.
